# EUROPÄISCHE PATENTANMELDUNG

(11) **EP 1 681 497 A2**
(43) Veröffentlichungstag der Anmeldung: **19.07.2006**
(21) Anmeldenummer: 05027987.6
(22) Anmeldetag: 21.12.2005
(51) Int. Cl.: F16H 61/688, F16D 48/06

(54) **Verfahren zur Steuerung eines Doppelkupplungsgetriebes**

(30) Priorität: 15.01.2005 DE 102005001976
(71) Anmelder: LuK Lamellen und Kupplungsbau Beteiligungs KG, 77815 Bühl (DE)
(72) Erfinder: Pollak, Burkhard, Dr., 8010 Graz (AT); Berger, Reinhard, Dr., 77815 Bühl (AT)

(57) **Zusammenfassung**

Ein Verfahren zur Steuerung eines Doppelkupplungsgetriebes mit einem ersten Teilgetriebe, dem eine erste Motorkupplung und eine erste Gruppe von Gängen zugeordnet ist, und einem zweiten Teilgetriebe, dem eine zweite Motorkupplung und eine zweite Gruppe von Gängen zugeordnet ist, enthält den Schritt des Einlegens eines dem einen Teilgetriebe zugeordneten Vorwärtsgangs und eines dem anderen Teilgetriebe zugeordneten Rückwärtsgangs, wenn das Getriebe bei Fahrzeugstillstand in einer Nichtfahrstufe ist.

## Beschreibung

Die Erfindung betrifft ein Verfahren zur Steuerung eines Doppelkupplungsgetriebes, insbesondere eine Strategie zur Gangvorwahl bei nassen Doppelkupplungsgetrieben.

Doppelkupplungsgetriebe weisen zwei Teilgetriebe auf, denen jeweils eine Gruppe von Gängen und eine Motorkupplung zugeordnet ist. Ein solches Doppelkupplungsgetriebe ist beispielsweise aus der DE 35 46 454 A1 bekannt.

Üblich ist dabei, dem einen Teilgetriebe die geraden Gänge und dem anderen Teilgetriebe die ungeraden Gänge zuzuordnen, so dass bei einem normalen, sequentiellen Schaltvorgang, d.h. von einem eingelegten alten Gang in einen nächsthöheren bzw. nächstniedrigeren Zielgang, jeweils zwischen den Teilgetrieben gesprungen wird. Ist der Ausgangsgang dem ersten Teilgetriebe zugeordnet, wird zunächst die dem Teilgetriebe des neuen Ganges zugeordnete Motorkupplung geöffnet, der neue Gang eingelegt und in einem anschließenden überschnittenen Öffnen der dem Teilgetriebe des alten Ganges zugeordneten Motorkupplung und Schließen der dem Teilgetriebe des neuen Ganges zugeordneten Motorkupplung der neue Gang eingelegt. Die Kraftübertragung erfolgt abwechselnd über das erste Teilgetriebe mit der ersten Motorkupplung und der ersten Getriebeeingangswelle und über das zweite Teilgetriebe mit der zweiten Motorkupplung und der zweiten Getriebeeingangswelle.

Doppelungskupplungsgetriebe sind zumeist automatisiert ausgebildet, da bei manueller Betätigung von zwei Motorkupplungen und Schaltungen der Gänge mit vorübergehend zwei gleichzeitig eingelegten Gängen ein erheblicher mechanischer Aufwand erforderlich wäre.

Aus der DE 101 09 662 A1 ist eine Steuerungsstrategie für ein Doppelkupplungsgetriebe bekannt, die in Situationen angewandt wird, bei denen mehrfache, kurzfristige Fahrtrichtungswechsel auftreten, beispielsweise für das Rangieren aus Parklücken bzw. in Parklücken oder das Freischaukeln im Schnee. Um die vielen getriebeinternen Schalt- und Kupplungsvorgänge zu umgehen, und gleichzeitig den Kupplungsverschleiß zu minimieren, schlägt die DE 101 09 662 A1 vor, in einem Richtungswechselmodus, in dem mehrfach zwischen Vorwärts- und Rückwärtsfahrt gewechselt wird, in einem der Teilgetriebe einen Vorwärtsgang und in dem anderen der Teilgetriebe einen Rückwärtsgang permanent eingelegt zu halten. Der Fahrtrichtungswechsel wird dann durch wechselweises Öffnen der dem einen Teilgetriebe zugeordneten Motorkupplung und Schließen der dem anderen Teilgetriebe zugeordneten Motorkupplung bewirkt. Gewöhnlich wird in den Teilgetrieben jeweils der kleinste der Rückwärtsgänge und der kleinste der Vorwärtsgänge gewählt. Ob ein Richtungswechselmodus vorliegt, wird entweder manuell durch Betätigen eines Schalters oder automatisiert festgelegt, indem ein Richtungswechselmodus dann angenommen wird, wenn innerhalb einer vorbestimmten Zeitspanne mehrmalige Fahrtrichtungswechsel ausgelöst werden. Das Ende des Richtungswechselmodus wird zum Beispiel durch eine eine vorbestimmte Zeitspanne überschreitende Bremspedalbetätigung, durch einen bestimmten Bremsdruck, eine bestimmte Zeitspanne oder eine einen vorbestimmten Pedalweg überschreitende Gaspedalbetätigung oder ähnliches festgelegt.

Die automatisierte Steuerung eines solchen Doppelkupplungsgetriebes sieht darüber hinaus häufig das Vorwählen bzw. frühzeitige Einlegen eines Anfahrganges vor, wenn das Fahrzeug im Stillstand ist und der Wählhebel in einer Nichtfahrtstufe ist. Dies dient insbesondere dazu, eine spontane Reaktion des Fahrzeuges sicherzustellen, insbesondere in Kombination mit einer Parksperre, die durch den Getriebeaktor betätigt wird. Außerdem ist auch gerade bei tiefen Temperaturen die Vorwahl oftmals wünschenswert, um ein so genanntes Schaltkratzen, d.h. unangenehme Geräusche beim Schalten, aufgrund von Schleppmomenten in der Kupplung zu vermeiden. Nasse Kupplungen haben im Vergleich zu trockenen Kupplungen höhere Schleppmomente.

Andererseits kann insbesondere bei Kälte, wenn die Viskosität des Kupplungsfluids (zum Beispiel des Getriebeöls) erhöht ist, das Schleppmoment an die Größe des Kriechmoments des Fahrzeuges heranreichen, so dass die Möglichkeit besteht, dass ein Fahrzeug bei einer Vorwahl des Anfahrgangs ankriecht, wenngleich die Kupplung noch nicht angelegt ist, zum Beispiel solange der Wählhebel in der Neutralposition (N) oder Parkposition (P) ist.

Davon ausgehend ist es Aufgabe der Erfindung, ein Verfahren zur Steuerung eines Doppelkupplungsgetriebes vorzusehen, mit welchem das unerwünschte Ankriechen des Fahrzeuges, insbesondere bei tiefen Temperaturen, ohne angelegte Kupplung vermieden werden kann.

Diese Aufgabe wird mit einem Verfahren mit den Merkmalen des Anspruchs 1 gelöst. Bevorzugte Ausführungsformen sind in den abhängigen Ansprüchen angegeben.

Der Erfindung liegt der Gedanke zugrunde, in einer Position, in der die Kupplungen der Teilgetriebe des Doppelkupplungsgetriebes nicht angelegt sind, und das Fahrzeug im Fahrzeugstillstand sein sollte, derart eine Gangvorwahl in beiden Teilgetrieben vorzunehmen, dass sich etwaige auftretende Schleppmomente der Kupplungen beider Teilgetriebe bzw. die durch die Schleppmomente bewirkten Abtriebsmomente zumindest soweit aufheben, dass das Fahrzeug nicht in einen Zustand versetzt wird, in dem es änkriecht. Dies bedeutet, dass sich die Momente zumindest teilweise aufheben müssen, und zwar soweit, dass das resultierende Abtriebsmoment kleiner als das Moment ist, das für ein Ankriechen des Fahrzeuges erforderlich wäre.

Dazu sieht die Erfindung ein Verfahren zur Steuerung eines Doppelkupplungsgetriebes mit einem ersten Teilgetriebe, dem eine erste Motorkupplung und eine erste Gruppe von Gängen zugeordnet ist, und einem zweiten Teilgetriebe, dem eine zweite Motorkupplung und eine zweite Gruppe von Gängen zugeordnet ist, vor, wobei ein dem einem Teilgetriebe zugeordneter Vorwärtsgang und ein dem anderen Teilgetriebe zugeordneter Rückwärtsgang eingelegt gehalten werden, wenn das Getriebe bei Fahrzeugstillstand in einer Nichtfahrstufe ist.

Vorzugsweise wird bei Vorhandensein mehrerer Rückwärtsgänge der kleinste der Rückwärtsgänge verwendet. Nach einer bevorzugten Ausführungsform wird außerdem der kleinste der Vorwärtsgänge desjenigen Teilgetriebes verwendet, das den verwendeten Rückwärtsgang nicht enthält. Gewöhnlich ist dies der erste Gang, wenn der erste Gang und der Rückwärtsgang unterschiedlichen Teilgetrieben zugeordnet sind. Ist der Rückwärtsgang der Gruppe der ungeraden Gänge zugeordnet, wird die Kombination zweiter Gang und Rückwärtsgang vorgewählt. Dies ist insbesondere bei starker Kälte vorteilhaft, da sich der erste Gang manchmal wegen des hohen Schleppmoments der Nasskupplung mit dem kalten Kupplungsfluid (Kupplungsöl) nur schwer oder gar nicht einlegen lässt, so dass im zweiten Gang angefahren werden soll, was Winterprogrammen von automatisierten Schaltgetrieben entspricht. Alternativ kann aus diesem Grund grundsätzlich der zweite Gang als Anfahrgang gewählt werden.

Vorzugsweise wird ein Temperatursignal erfasst und das Verfahren nur dann ausgeführt, d.h. die Gänge nur dann eingelegt, wenn die erfasste Temperatur unter einer vorgegebenen Schwellentemperatur liegt. Da bei warmen Kupplungsfluid keine erhöhten Schleppmomente durch zähes Kupplungsfluid auftreten, die dazu führen würden, dass das Fahrzeug ankriecht, ist in diesem Fall eine entsprechende Steuerung nicht erforderlich.

Als erfasste Temperatur dient vorzugsweise die Getriebeöltemperatur. Die Motortemperatur, die Kühlwassertemperatur oder eine Umgebungstemperatur können ebenfalls verwendet werden. Außerdem ist es möglich, das Verfahren nur dann auszuführen, wenn mehrere der genannten Temperaturen unter einer vorgegebenen Schwellentemperatur liegen. Die Temperaturen werden durch im Stand der Technik bekannte Temperatursensoren erfasst oder mit Hilfe von anderen Parametern durch die Steuerung ermittelt.

Vorzugsweise wird das Verfahren dann ausgeführt, wenn eine durch den Getriebeaktor betätigte Parksperre eingelegt wird, wenn eine solche vorhanden ist. Auch wenn eine anderweitig gestaltete Parksperre vorhanden ist, kann das Kriterium zum Einlegen der Gänge, d.h. zum Ausführen des erfindungsgemäßen Verfahrens, das Einlegen der Parksperre sein.

Alternativ dazu wird bevorzugt das Verfahren erst dann ausgeführt, d.h. die Gänge erst dann eingelegt, wenn der Fahrzeugmotor angelassen wird und die Parksperre eingelegt ist.

Nachfolgend wird die Erfindung beispielhaft anhand der beigefügten Figuren beschrieben, in denen:
Fig. 1 eine Ausführung eines Doppelkupplungsgetriebes in schematischer Darstellung zeigt;
Fig. 2 ein Flussdiagramm ist, das die Gangvorwahl in einer ersten Ausführungsform der Erfindung zeigt; und
Fig. 3 ein Flussdiagramm ist, das die Gangvorwahl in einer zweiten Ausführungsform der Erfindung zeigt.

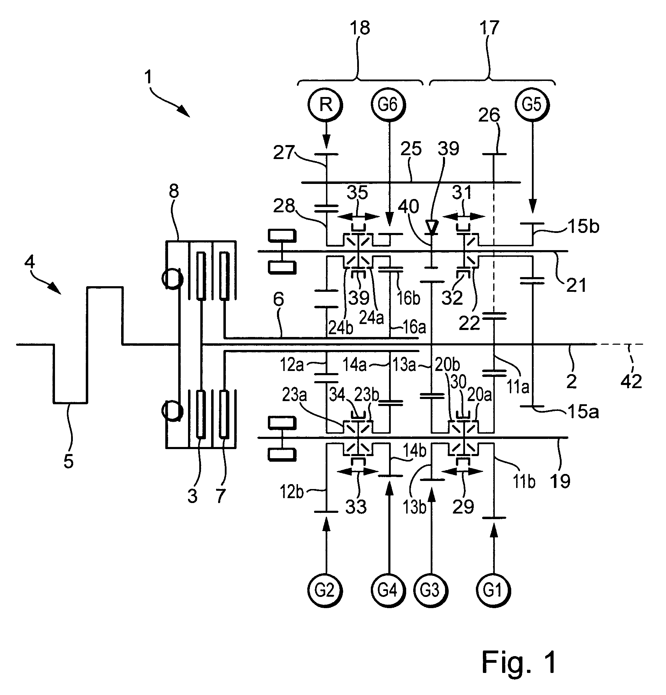

Ein bekanntes in Fig. 1 schematisch dargestelltes Doppelkupplungsgetriebe 1 weist eine erste Getriebeeingangswelle 2 auf, die über eine erste Motorkupplung 3 mit einem als Verbrennungsmotor ausgebildeten Antriebsmotor 4 verbindbar ist, der durch eine Kurbelwelle 5 dargestellt ist.

Koaxial zur ersten Getriebeeingangswelle 2 ist eine als Hohlwelle ausgebildete zweite Getriebeeingangswelle 6 angeordnet, die über eine zweite Motorkupplung 7 mit dem Antriebsmotor verbindbar ist. Die erste Motorkupplung 3 und die zweite Motorkupplung 7 sind als Nasskupplungen ausgebildet und können zum Beispiel in einem gemeinsamen Kupplungskorb 8 angeordnet sein.

Der ersten Getriebeeingangswelle 2 sind ein Zahnradpaar 11 eines ersten Vorwärtsgangs G1, ein Zahnradpaar 13 eines dritten Vorwärtsgangs G3 und ein Zahnradpaar 15 eines fünften Vorwärtsgangs G5 zugeordnet, wobei die Festräder 11a, 13a und 15a fest mit der ersten Getriebeeingangswelle 2 verbunden sind. Der zweiten Getriebeeingangswelle 6 sind ein Zahnradpaar 12 eines zweiten Vorwärtsgangs G2, ein Zahnradpaar 14 eines vierten Vorwärtsgangs G4 und ein Zahnradpaar 16 eines sechsten Vorwärtsgangs G6 zugeordnet, wobei die betreffenden Festräder 12a, 14a und 16a fest mit der zweiten Getriebeeingangswelle 6 verbunden sind. Die erste Motorkupplung 3, die erste Getriebeeingangswelle 2 und die Vorwärtsgänge G1, G3 und G5 bilden ein erstes Teilgetriebe 17, während ein zweites Teilgetriebe 18 durch die zweite Motorkupplung 7, die zweite Getriebeeingangswelle 6 und die Vorwärtsgänge G2, G4 und G6 gebildet wird.

Die Losräder 11 b und 13b der Gänge G1 und G3 des ersten Teilgetriebes 17 sind drehbar auf einer ersten Abtriebswelle 19 gelagert und über zu geordnete Gangschaltkupplungen 20a, 20b mit der ersten Abtriebswelle 19 drehfest verbindbar. Das Losrad 15b des fünften Ganges G5 des ersten Teilgetriebes 17 ist drehbar auf einer zweiten Abtriebswelle 21 gelagert und über eine zugeordnete Gangschaltkupplung 22 mit der zweiten Abtriebswelle 21 drehfest verbindbar. Die Losräder 12b und 14b der Gänge G2 und G4 des zweiten Teilgetriebes 18 sind drehbar auf der ersten Abtriebswelle 19 gelagert und über zugeordnete Gangschaltkupplungen 23a, 23b mit dieser drehfest verbindbar. Das Losrad 16b des sechsten Ganges G6 des zweiten Teilgetriebes 18 ist drehbar auf der zweiten Abtriebswelle 21 gelagert und über eine zugeordnete Gangschaltkupplung 24a mit dieser drehfest verbindbar.

Ein auf einer Zwischenwelle 25 angeordnetes Festrad 26 eines Rückwärtsganges R greift in das Festrad 11a des ersten Ganges G1 ein und steht somit mit der ersten Getriebeeingangswelle 2 in Verbindung. Ein zweites Festrad 27 der Zwischenwelle 25 steht mit einem auf der zweiten Abtriebswelle 21 drehbar gelagerten Losrad 28 in Eingriff, das über eine zugeordnete Gangschaltkupplung 24b mit dieser drehfest verbindbar ist. Aufgrund seiner Verbindung mit der ersten Getriebeeingangswelle 2 ist der Rückwärtsgang R dem ersten Teilgetriebe 17 zugeordnet.

Die Gangschaltkupplungen 20a und 20b der Gänge G1 und G3 sind durch eine Axialverschiebung 29 einer ersten Schaltmuffe 30 betätigbar, d.h. schließ- und trennbar, wodurch die Gänge G1 und G3 ein- und auslegbar sind. Entsprechend ist die Gangschaltkupplung 22 des fünften Ganges durch eine Axialverschiebung 31 einer zweiten Schaltmuffe 32 betätigbar. Die erste und die zweite Schaltmuffe 30, 32 sind dem ersten Teilgetriebe 17 zugeordnet. Die Gangschaltkupplungen 23a und 23b der Gänge G2 und G4 sind durch eine Axialverschiebung 33 einer dritten Schaltmuffe 34 betätigbar, während die Gangschaltkupplungen 24a und 24b der Gänge G6 und R durch eine Axialverschiebung 35 einer vierten Schaltmuffe 36 betätigbar sind, wobei die dritte Schaltmuffe 34 dem zweiten Teilgetriebe 18 zugeordnet ist, während die vierte Schaltmuffe 36 Bestandteil beider Teilgetriebe 17, 18 ist.

Eine Parksperre 39 ist vorgesehen, die auf ein separates, auf der zweiten Abtriebswelle 21 angeordnetes Festzahnrad 40 einwirkend angeordnet ist.

Bei der in Fig. 1 dargestellten Ausführungsform des Getriebes sind der Rückwärtsgang R und der erste Gang G1 dem gleichen Teilgetriebe 17 zugeordnet. Wenn beispielsweise bei kalten Temperaturen die Zähigkeit des Kupplungsfluids erhöht ist und daher das Auftreten eines Schleppmoments, das die Größe eines Kriechmoments erreicht, wahrscheinlich ist, soll erfindungsgemäß das Ankriechen des Fahrzeugs ohne angelegte Kupplung verhindert werden, wenn ein Vorwärtsfahrtgang in einer Nichtfahrposition (N, P) eingelegt ist. Dazu werden der Rückwärtsgang R, der dem Teilgetriebe 17 zugeordnet ist, und der kleinste der Vorwärtsfahrtgänge, die dem anderen Teilgetriebe 18 zugeordnet sind, in diesem Fall der zweite Gang G2, vorgewählt. Diese Gangvorwahl wird insbesondere bei ausgeschaltetem Verbrennungsmotor, zum Beispiel bei geparktem Fahrzeug, vorgenommen. Wenn der erste Gang G1 und der Rückwärtsgang R unterschiedlichen Teilgetrieben zugeordnet wären, könnte man diese beiden Gänge benutzen. Allerdings ist die Wahl des zweiten Ganges insbesondere bei tiefen Temperaturen (Winter) als Anfahrgang oft wünschenswert.

Wird das Fahrzeug angelassen und befindet sich der Wählhebel in einer Nichtfahrstufe (P oder N), so heben sich die Abtriebsmomente, die an der ersten Abtriebswelle 19 bzw. der zweiten Abtriebswelle 21 durch die Schleppmomente der Kupplungen 3, 7 erzeugt werden, durch die Vorwahl des Rückwärtsgangs R und die Vorwahl des Vorwärtsgangs G2 soweit auf, dass ein Ankriechen des Fahrzeuges aufgrund der Schleppmomente, d.h. ohne dass eine Kupplung 3, 7 aktiv angelegt ist, verhindert wird.

Zum Bestimmen, ob die Gänge erfindungsgemäß vorgewählt werden sollen, ist vorzugsweise ein (nicht dargestellter) Temperatursensor vorgesehen, welcher direkt die Öltemperatur des Getriebes bzw. des Kupplungsfluids, zum Beispiel Getriebeöl, ermittelt. Aufgrund der Temperaturabhängigkeit der Viskosität des Kupplungsfluids kann bestimmt werden, ab wann eine Gangvorwahl in der Form eines vorgewählten Rückwärtsgangs und eines gleichzeitig vorgewählten Vorwärtsgangs bei Fahrzeugstillstand und nicht angelegter Kupplung vorgenommen werden soll. Diese Steuerung wird durch das Getriebesteuergerät vorgenommen.

Dabei ist es möglich, das Temperatursignal dann zu erfassen, wenn das Fahrzeug angelassen werden soll, zum Beispiel, so dass unmittelbar nach der Zündung bei eingelegter Parksperre das Getriebesteuergerät die Getriebeöltemperatur (Kupplungsfluidtemperatur) abfragt und die beiden Anfahrgänge einlegt, wobei eine bevorzugte Reihenfolge zwischen rückwärts und vorwärts definiert werden kann, wenn die Getriebeöltemperatur oder eine anderweitig als Kriterium benutzte Temperatur unter einem bestimmten Schwellenwert liegt. Dies bietet den Vorteil, das Verfahren gezielt dann auszuführen, wenn nach einem Stillstand des Fahrzeuges die Temperatur des Getriebeöls unter eine vorgegebene Temperatur abgefallen ist und somit das Getriebeöl eine bestimmte erhöhte Viskosität aufweist, welche möglicherweise zu einem derartigen Schleppmoment führen könnte, dass ein unbeabsichtigtes Ankriechen des Fahrzeuges möglich ist.

Alternativ werden die Vorwahlgänge bereits bei der Parksperren-Betätigung eingelegt, wobei in diesem Fall das Temperaturkriterium weniger ausschlaggebend ist, da das Kupplungsfluid nach einer zumindest längeren Fahrt vermutlich eine ausreichend hohe Temperatur erreicht hat. Dies hat den Vorteil, dass die Gänge nach dem Start des Motors unmittelbar und ohne Verzögerung nach dem Auslegen der Parksperre zur Verfügung stehen. Wenn dabei der zweite Gang G2 und der Rückwärtsgang R vorgewählt sind, so kann in Abhängigkeit von einem Temperatursignal unmittelbar nach dem Auslegen der Parksperre zum Anfahren der erste Gang eingelegt werden, sobald der Wählhebel in die Position D (Fahrt) gebracht wird. Alternativ kann ein Anfahren im zweiten Gang vorgesehen werden.

Das Verfahren wird dann ausgeführt, wenn eine der Nichtfahrstufen (P oder N) gewählt ist. Alternativ ist es auch möglich, die Strategie bei entweder nur P oder nur N zu realisieren. Abhängig von einem Zeitkriterium, d.h. nach Ablauf einer bestimmten Zeit, kann die beschrieben Vorwahl rückgängig gemacht werden, da dann einerseits das Kupplungsfluid eine ausreichende Temperatur und somit wieder niedrigere Viskosität erreicht hat und andererseits der Anfahrtsvorgang beschleunigt wird. Insbesondere bei Ablauf einer bestimmten Zeit mit einer Wählhebelposition neutral (N) bei laufendem Motor wird es bevorzugt, die Vorwahl des Vorwärtsgangs und des kompensierenden Rückwärtsgangs aufzuheben und lediglich auf eine an sich bekannte Anfahrtsstrategie Rücksicht zu nehmen und den Anfahrgang entsprechend vorzuwählen. Dies kann der gleiche Gang wie der in der Strategie zur Vermeidung eines unbeabsichtigten Ankriechens vorgewählte Vorwärtsgang oder ein anderer Vorwärtsgang sein.

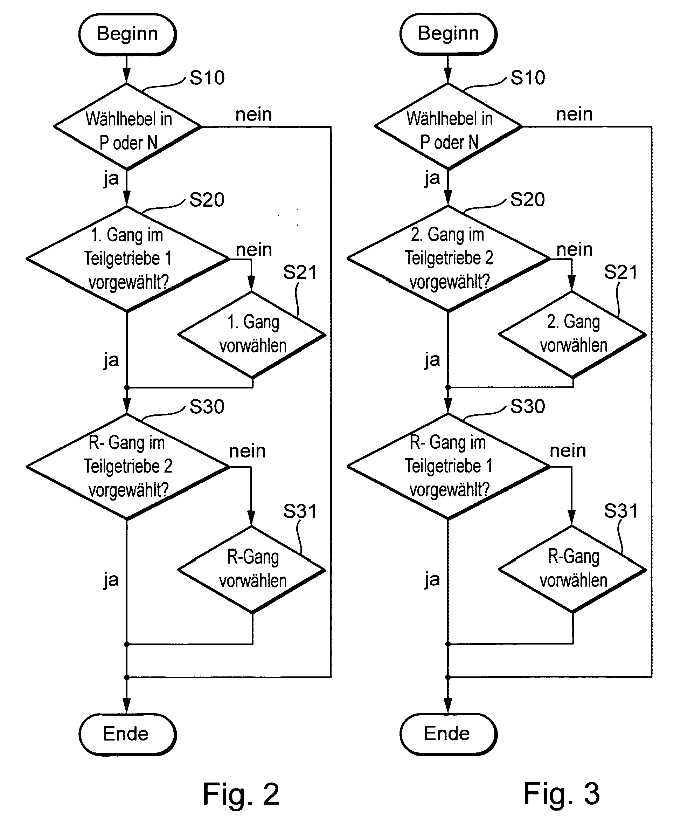

In Fig. 2 ist im Flussdiagramm der Verfahrensablauf in einer ersten Ausführungsform dargestellt, die für den Fall gilt, dass der erste Gang G1 und der Rückwärtsgang in unterschiedlichen Teilgetrieben angeordnet sind. Nach Beginn des Verfahrens wird im Schritt S10 zunächst bestimmt, ob der Wählhebel in der Position P oder N, d.h. einer Nichtfahrposition ist. Ist der Wählhebel nicht in P- oder N-Position, so endet das Verfahren ohne weitere Maßnahme. Ist jedoch die P- oder N-Position gewählt, so wird überprüft, ob im ersten Teilgetriebe (Teilgetriebe 17) der erste Gang G1 vorgewählt ist. Ist in diesem Schritt S20 bestimmt, dass der erste Gang noch nicht vorgewählt ist, so wird er in Schritt S21 vorgewählt. Anschließend wird im Schritt S30 überprüft, ob im anderen Teilgetriebe (Teilgetriebe 18) der Rückwärtsgang R vorgewählt ist. Ist dies nicht der Fall, so wird er im Schritt S31 vorgewählt. Damit sind ein Vorwärts- und ein Rückwärtsgang, vorzugsweise der kleinste Vorwärtsgang und der kleinste Rückwärtsgang von zwei unterschiedlichen Teilgetrieben, derart vorgewählt, dass sich die durch die Schleppmomente der Kupplungen erzeugten Abtriebsmomente soweit aufheben, dass ein Ankriechen des Fahrzeuges ohne angelegte Kupplung ausgeschlossen ist, auch wenn die Viskosität des Kupplungsfluids hoch ist.

In Fig. 3 ist die Situation dargestellt, wenn der erste Gang und der Rückwärtsgang dem gleichen Teilgetriebe zugeordnet sind. Das Verfahren unterscheidet sich von dem in Fig. 2 dargestellten Ablauf dadurch, dass in Schritt S20 überprüft wird, ob der zweite Gang im entsprechenden Teilgetriebe vorgewählt ist und ggf. im Schritt S21 der zweite Gang statt des ersten Gangs vorgewählt wird.

Somit schlägt die Erfindung eine Strategie zur Vorwahl von Gängen in den Nichtfahrstufen (P, N) bei insbesondere nassen Doppelkupplungsgetrieben und abgestelltem Motor bzw. geparktem Fahrzeug vor. Je ein Anfahrgang wird für beide Fahrtrichtungen in unterschiedlichen Teilgetrieben eingelegt. Somit können bei tiefen Temperaturen Schaltprobleme durch ein auftretendes Schleppmoment vermieden werden, was dazu führt, dass sich die durch die Schleppmomente der beiden Kupplungen entstehenden Abtriebsmomente (Radmomente) zumindest soweit teilweise aufheben, dass ein unbeabsichtigtes Ankriechen in Fahrtposition N verhindert wird. Der Einsatz dieser Strategie kann durch Bestimmen der Temperatur des Getriebeöls oder der Umgebungstemperatur, beispielsweise, auf Einsatzbedingungen (Kälte) begrenzt werden, in denen mit erhöhten Schleppmomenten gerechnet werden muss.

### Bezugszeichenliste

- 1: Doppelkupplungsgetriebe
- 2: (erste) Getriebeeingangswelle
- 3: (erste) Motorkupplung
- 4: Antriebsmotor
- 5: Kurbelwelle
- 6: (zweite) Getriebeeingangswelle
- 7: (zweite) Motorkupplung
- 8: Kupplungskorb
- 11: Zahnradpaar (des ersten Gangs G1)
- 11a: Festrad (des ersten Gangs G1)
- 11 b: Losrad (des ersten Gangs G1)
- 12: Zahnradpaar (des zweiten Gangs G2)
- 12a: Festrad (des zweiten Gangs G2)
- 12b: Losrad (des zweiten Gangs G2)
- 13: Zahnradpaar (des dritten Gangs G3)
- 13a: Festrad (des dritten Gangs G3)
- 13b: Losrad (des dritten Gangs G3)
- 14: Zahnradpaar (des vierten Gangs G4)
- 14a: Festrad (des vierten Gangs G4)
- 14b: Losrad (des vierten Gangs G4)
- 15: Zahnradpaar (des fünften Gangs G5)
- 15a: Festrad (des fünften Gangs G5)
- 15b: Losrad (des fünften Gangs G5)
- 16: Zahnradpaar (des sechsten Gangs G6)
- 16a: Festrad (des sechsten Gangs G6)
- 16b: Losrad (des sechsten Gangs G6)
- 17: (erstes) Teilgetriebe
- 18: (zweites) Teilgetriebe
- 19: (erste) Abtriebswelle
- 20a: Gangschaltkupplung (des ersten Gangs G1)
- 20b: Gangschaltkupplung (des dritten Gangs G3)
- 21: (zweite) Abtriebswelle
- 22: Gangschaltkupplung (des fünften Gangs G5)
- 23a: Gangschaltkupplung (des zweiten Gangs G2)
- 23b: Gangschaltkupplung (des vierten Gangs G4)
- 24a: Gangschaltkupplung (des sechsten Gangs G6)
- 24b: Gangschaltkupplung (des Rückwärtsgangs R)
- 25: Zwischenwelle (des Rückwärtsgangs R)
- 26: (erstes) Festrad (des Rückwärtsgangs R)
- 27: (zweites) Festrad (des Rückwärtsgangs R)
- 28: Losrad (des Rückwärtsgangs R)
- 29: Axialverschiebung (der ersten Schaltmuffe)
- 30: (erste) Schaltmuffe
- 31: Axialverschiebung (der zweiten Schaltmuffe)
- 32: (zweite) Schaltmuffe
- 33: Axialverschiebung (der dritten Schaltmuffe)
- 34: (dritte) Schaltmuffe
- 35: Axialverschiebung (der vierten Schaltmuffe)
- 36: (vierte) Schaltmuffe
- 39: Parksperre
- 40: Festzahnrad
- 42: Drehachse (der Getriebeeingangswellen)
- G1: erster (Vorwärts-)Gang
- G2: zweiter (Vorwärts-)Gang
- G3: dritter (Vorwärts-)Gang
- G4: vierter (Vorwärts-)Gang
- G5: fünfter (Vorwärts-)Gang
- G6: sechster (Vowärts-)Gang
- R: Rückwärtsgang

## Patentansprüche

1. Verfahren zur Steuerung eines Doppelkupplungsgetriebes mit einem ersten Teilgetriebe, dem eine erste Motorkupplung und eine erste Gruppe von Gängen zugeordnet ist, und einem zweiten Teilgetriebe, dem eine zweite Motorkupplung und eine zweite Gruppe von Gängen zugeordnet ist, wobei ein dem einen Teilgetriebe zugeordneter Vorwärtsgang und ein dem anderen Teilgetriebe zugeordneter Rückwärtsgang eingelegt gehalten werden, wenn das Getriebe bei Fahrzeugstillstand in einer Nichtfahrstufe ist.

2. Verfahren nach Anspruch 1, **dadurch gekennzeichnet, dass** bei Vorhandensein mehrerer Rückwärtsgänge der kleinste der Rückwärtsgänge verwendet wird.

3. Verfahren nach Anspruch 1 oder 2, **dadurch gekennzeichnet, dass** der kleinste der Vorwärtsgänge des Teilgetriebes, das den Rückwärtsgang nicht enthält, verwendet wird.

4. Verfahren nach einem der vorhergehenden Ansprüche, **dadurch gekennzeichnet, dass** ein Temperatursignal erfasst wird und die Gänge eingelegt werden, wenn die erfasste Temperatur unter einer vorgegebenen Schwellentemperatur liegt.

5. Verfahren nach Anspruch 4, **dadurch gekennzeichnet, dass** das Temperatursignal die Getriebeöltemperatur, die Motortemperatur, die Kühlwassertemperatur oder die Umgebungstemperatur oder Kombinationen davon angibt.

6. Verfahren nach einem der vorhergehenden Ansprüche, **dadurch gekennzeichnet, dass** die Gänge eingelegt werden, wenn bei Vorhandensein einer Parksperreneinrichtung die Parksperre eingelegt wird.

7. Verfahren nach einem der Ansprüche 1 bis 5, **dadurch gekennzeichnet, dass** die Gänge nach einem Anlassen des Fahrzeugmotors eingelegt werden, wenn die Parksperre eingelegt ist.
